# EUROPEAN PATENT APPLICATION

(11) **EP 4 727 182 A1**
(43) Date of publication of application: **15.04.2026**
(21) Application number: 24306676.8
(22) Date of filing: 11.10.2024
(51) Int. Cl.: H04W 12/04, H04W 4/50, H04W 12/30, H04W 12/40, H04W 12/42, H04W 8/20

(54) **IMPROVED IN-FACTORY PROFILE PROVISIONING IN EUICCS**

(71) Applicant: THALES DIS FRANCE SAS, 92190 Meudon (FR)
(72) Inventor: DEMARTY, Joël, 35520 Montreuil-le-Gast (FR)
(74) Representative: Lotaut, Yacine Diaw

(57) **Abstract**

The disclosure provides a method for installing a bound profile package on an embedded Universal Integrated Circuit Card, eUICC, during manufacturing of a device embedding the eUICC, the method being carried out by a binding module and comprising the following steps:
- ordering (202) at least one protected profile package from a profile management server;
- obtaining (209; 213) at least one identifier of the eUICC;
- binding (210; 214) at least one of the ordered at least one protected profile package with the identifier of the eUICC, to obtain a bound profile package;
- installing (211: 215) the obtained bound profile package on the eUICC.

## Description

This disclosure is related to the field of provisioning of an embedded Subscriber Identity Module, eSIM, and in particular to the filed of In-Factory Profile Provisioning, IFPP.

The present disclosure is useful in particular in the context of an offline IFPP of eSIMs.

Secure elements can be integrated in terminals (mobile user terminal, Internet of Thing terminal, etc) so as to allow to securely access a mobile network based on a radio-communication technology, using a subscription profile stored in the secure element.

Such secure elements are generally referred to as Universal Integrated Circuit Card, UICC. UICCs have strongly evolved over the last decades. UICCs were originally in the form of physical cards that can be inserted and removed from terminals having a slot designed to receive the UICC.

More recently, a new form of UICC emerged as eUICC (embedded UICC), which is surface mounted in the terminal 100 in a factory and in which a profile (eSIM) is virtualized.

When this new form of UICC is embedded in a terminal, it does not originally store a subscription profile, which can be obtained by the user of the terminal once the terminal is commissioned for the first time, or which can be provisioned during manufacturing of the terminal.

A solution that is used to provision a subscription profile, or eSIM, in an eUICC embedded in a device, is called In-Factory Profile Provisioning, IFPP, as standardized by the GSMA specifications SGP.41 eSIM iFPP Architecture and Requirements, Draft 17, GSM Association, dated October 4, 2023, named SGP.41 in what follows. According to this solution, the Original Equipment Manufacturer, OEM, in charge of manufacturing the device, is in charge of provisioning a profile package in the eUICC of a device during its manufacturing.

Such a process is required to be offline, for security reasons, which means that there is not direct connectivity between the eUICC and a remote profile management server.

A current solution is based on provisioning of Bound Profile Packages for factory, BPP, which are defined in the specifications SGP.22, "RSP Technical Specification", version 2.2.2, dated June 5th, 2020, the BPP being obtained by a device manufacturer from the remote profile management server.

According to the SGP.41 solution, the identifier EID and a public key of the eUICC on which a BPP is to be installed, has to be known in advance by the device manufacturer, so as to communicate this information to the profile management server when ordering one or several BPPs for one or several eUICCs of devices to be manufactured.

This requires the device manufacturer to efficiently track eUICCs and to know their EID and public key in advance, which in practice, may be very challenging.

In addition, this solution requires to anticipate the manufacturing of devices with eUICCs for which BPPs have been ordered in advance to a given profile management server associated with a given mobile network operator. In case of a last minute order from a customer that requires devices with eUICC associated with another mobile network operator, the BPPs that have been previously ordered have to be dumped and new ones have to be ordered to the right profile management server, which, if performed online, contradicts the goals of IFPP.

There is therefore a lack of flexibility for obtaining profile packages to be installed in eUICC of devices during their manufacturing, in the context of IFPP.

The present disclosure aims at improving the situation.

A first aspect of the disclosure concerns a method for installing a bound profile package on an embedded Universal Integrated Circuit Card, eUICC during manufacturing of a device embedding the eUICC, the method being carried out by a binding module and comprising the following steps:
- ordering at least one protected profile package from a profile management server;
- obtaining at least one identifier of the eUICC;
- binding at least one of the ordered at least one protected profile package with the identifier of the eUICC, to obtain a bound profile package; and
- installing the obtained bound profile package on the eUICC.

Therefore, according to the disclosure, the binding of the protected profile package is performed "on the fly," when installing the bound profile package on the eUICC. This enables to ensure a better flexibility as undifferentiated protected profile packages can be obtained in advance from the profile management server and stored in the binding module in a factory where the devices embedding the eUICC are manufactured.

According to some embodiments, the binding module may store a security token comprising a current value of a variable representing a remaining number of protected profile packages that the binding module is authorized to obtain, and the at least one protected profile package may be obtained from the profile management server by sending an order to obtain X protected profile packages, the order comprising the security token, X being an integer equal to or greater than 1, and X being less than the current value.

This enables the profile management server to provide undifferentiated protected profile packages to binding modules that are authorized to obtain them. In addition, this enables to limit the number of undifferentiated protected profile packages that can be obtained in advance by a given binding module.

In complement, the binding module may originally store a funding token signed by a certification authority, the funding token comprising a maximum value of protected profile packages that the binding module is authorized to obtain, the current value may be less than or equal to the maximum value, and the security token may be derived from the funding token or is the funding token.

Therefore, a budget of undifferentiated protected profile packages to be obtained can be attributed to a binding module by a certification authority. To this end, the manufacturer of the binding module may follow a certification process that is similar to the certification process applied to the manufacturer of the eUICC.

According to some embodiments, in response to the order to obtain X protected profile packages, the binding module may receive X protected profile packages and an updated security token from the profile management server, the updated security token comprising an updated current value of the variable representing a remaining number of protected profile packages that the binding module is authorized to obtain, the updated current value may be equal to the current value decreased by X, and the updated security token may be stored as the security token in the binding module.

This enables to dynamically maintain an updated current value of the variable representing a remaining number of protected profile packages that the binding module is authorized to obtain. Therefore, it enables the profile management server to control that the binding module is authorized to order new profile packages, before providing new protected profile packages to it. This enables to ensure that, at a given time, the binding module does not store more profile packages than the maximum value.

According to some embodiments, the method may further comprise, after installing Y bound profile packages on one or several eUICCs, Y being an integer equal to or greater than 1, the following steps:
- transmitting a report indicating installation of the Y bound profile packages to the profile management server, the report further comprising the stored security token;
- receiving, from the profile management server, an acknowledgment of the report, the acknowledgment comprising an updated security token, the updated security token comprising an updated current value of the variable representing a remaining number of protected profile packages that the binding module is authorized to obtain, wherein the updated current value is equal to the current value augmented by Y, and wherein the updated security token is stored as the security token in the binding module.

This enables to dynamically maintain an updated current value of the variable representing a remaining number of protected profile packages that the binding module is authorized to obtain. The binding module can therefore receive new undifferentiated protected profile packages if some previously obtained protected profile packages have been bound and installed on eUICC. This enables to ensure that, at a given time, the binding module does not store more protected profile packages than the maximum value, while giving flexibility to the device manufacturer.

Alternatively or in complement, the updated security token may be signed by the profile management server.

This enables the binding module to verify that the updated security token (and the protected profile packages in case of a protected profile package order) originates from the legitimate profile management server.

According to some embodiments, the updated security token may encapsulate the security token transmitted in the report or in the order.

This enables to keep track of the update of the security token, every time a transaction operation is performed based on the security token, which reinforces the security associated with the ordering and reporting of undifferentiated protected profile packages.

According to some embodiments, the method may further comprise receiving a renewed security token, from the profile management server wherein the renewed security token does not comprise the security token stored in the binding module, and may comprise:
- the current value of the variable representing a remaining number of protected profile packages that the binding module is authorized to obtain;
- the maximum value of the variable representing the maximum number of protected profile packages that the binding module is authorized to obtain;
- a signature of the certification authority.

This enables to simplify the security token, when it encapsulates too many previous versions of the security token for example. This enables to reduce the quantity of data exchanged between the binding module and the profile management server.

According to some embodiments, the binding module may obtain an identifier and a public key from the eUICC, and the protected profile package may be bound with the identifier and with the public key of the eUICC to obtain the bound profile package.

The bound profile package can therefore be a Bound Profile Package as defined in the specifications SGP.41 eSIM iFPP Architecture and Requirements, Draft 17, GSM Association, dated October 4, 2023. This ensures the interoperability with existing systems.

According to some embodiments, the ordered profile package may be a Protected Profile Package defined in the specifications SGP.41 eSIM iFPP Architecture and Requirements, Draft 17, GSM Association, dated October 4, 2023.

This ensures the interoperability with existing systems.

A second aspect of the disclosure concerns a computer program comprising instructions arranged for implementing the method according to the first aspect of the disclosure, when said instructions are executed by a processor.

A third aspect of the disclosure concerns a binding module configured for installing a bound profile package on an embedded Universal Integrated Circuit Card, eUICC during manufacturing of a device embedding the eUICC, the binding module comprising a processor configured for:
- ordering, via a first interface of the binding module, at least one protected profile package from a profile management server;
- obtaining, via a second interface of the binding module, at least one identifier of the eUICC;
- binding at least one of the ordered at least one protected profile package with the identifier of the eUICC, to obtain a bound profile package;
- installing, via the second interface, the obtained bound profile package on the eUICC.

According to some embodiments, the binding module may further comprise a memory storing a security token comprising a current value of a variable representing a remaining number of protected profile packages that the binding module is authorized to obtain, and the at least one protected profile package may be obtained from the profile management server by sending an order to obtain X protected profile packages, the order comprising the security token, X being an integer equal to or greater than 1, and X being less than the current value

A fourth aspect of the disclosure concerns a system comprising a binding module according to the third aspect of the disclosure, at least one device comprising an embedded Universal Integrated Circuit Card, and a profile management server.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### Brief description of the drawings:

[Fig. 1] shows a system for provisioning profile packages in eUICCs embedded in devices, according to IFPP, according to some embodiments of the disclosure;
[Fig. 2] illustrates the steps of a method according to some embodiments of the disclosure;
[Fig. 3] illustrates the structure of a binding module according to some embodiments of the disclosure.

### Detailed description

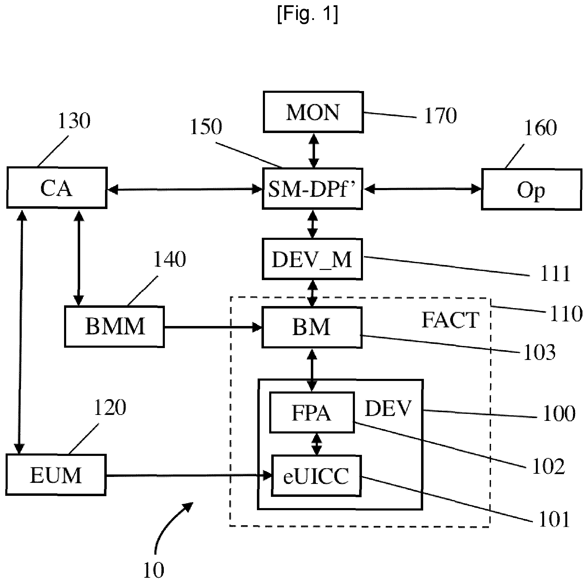

Figure 1 shows a system 10 for In-Factory Profile Provisioning, IFPP, of eSIMs, according to some embodiments of the disclosure.

The system 10 comprises at least one device 100 into which an eUICC 101 is embedded. Because the disclosure aims at provisioning an eSIM in the eUICC 101 during manufacturing and in an offline manner, according to IFPP, the device 100 is shown in a factory 110 on figure 1. Of course, several devices 100 are manufactured in the factory 110 over a given period, and different profile packages (eSIMs) have to be provisioned to the eUICC 101 of the several devices 100 during their manufacturing.

Before the profile package is provisioned in the eUICC 101 according to the disclosure, an eUICC operating system is loaded by the device manufacturer, represented by a device manufacturer entity 111, in each of the devices 100 during their manufacturing.

Each eUICC 101 that is embedded in a device 100 is uniquely defined by a unique identifier, named EID, for eUICC IDentifier, and is associated with a public key, which forms a pair with a private key secretly stored in the eUICC. The eUICC 101, before being loaded in the device 100, is manufactured by an eUICC manufacturer, named EUM and represented by an EUM entity 120 on figure 1.

A profile provisioning assistant 102 may allow the device manufacturer entity 111 to provision a profile package defining an eSIM in the eUICC 101. The profile provisioning assistant 102 can be a Factory Profile Assistant, FPA, as defined in the specifications SGP.41 eSIM iFPP Architecture and Requirements, Draft 17, GSM Association, dated October 4th, 2023, and named SGP.41 specifications in what follows.

The FPA 102 can be a hardware or software module, such as a low-level driver, or a Local Profile Assistant LPA or an Internet of Things Profile Assistant, IPA, in factory mode.

The FPA can be part of the device 100 or can be an entity in the factory 110 that is external to the device 100 and that can be used to communicate with several devices 100 being manufactured in the factory 110.

According to the SGP.41 specifications, an interface ESfac may be used to allow communications between the device manufacturer 111 and each FPA 102. An interface named ES10f may be used between the FPA 102 and the eUICC 101 to forward and install a profile package in the eUICC 101. As explained in what follows, according to the disclosure, a binding module 103 is arranged to communicate with each of the FPAs 102, instead of the device manufacturer 111, via an interface which can be noted ESfac', which can be an ESipa interface or an ES9 as defined in the technical specifications SGP.22, "RSP Technical Specification", version 2.2.2, dated June 5th, 2020, and in the technical specifications SGP.32, "eSIM IoT Technical Specification", version 1.1 dated April 29th, 2024.

The system 10 further comprises at least one profile management server 150, which can be a Subscriber Manager Data Preparation, SM-DP server, for example a SM-DP factory, SM-DPf, server as described in the SGP.41 specifications discussed above. The profile management server is in charge of preparing profile packages, such as Protected Profile Packages, PPP, as described above, to be downloaded in eUICC, after being bound with eUICCs (by the binding module 103 as explained in what follows). The profile management server 150 is associated with a mobile service provider or operator 160, as defined in the specifications "RSP Architecture", SGP.21, V3.1, GSMA, dated December 1st, 2023, named specifications SGP.21 in what follows. The profile management server 150 belongs to the mobile network operator so the entity 160 shown on figure 1 can refer to the operator's internal system.

The system 10 further comprises a certification authority 130, which can be an eSIM Certification Authority, eSIM CA. The eSIM CA 130 may:
- allow profile management servers 150 to integrate the system 10 described on figure 1, in particular, the eSIM CA 130 may deliver certificates to the authorized profile management servers 150, each certificate being associated with a public key of the corresponding profile management server 150;
- certify that the EUM entity 120 can be trusted and is entitled to manufacture eUICCs to be embedded in devices. A certificate can be issued to the EUM entity 120, which is associated with a public key of the EUM entity 120;
- perform other certification operations as described in what follows.

The wording "entity" refers to any module, hardware or software, implemented in a device or a server of the organization owning the entity.

According to the disclosure, the system 10 further comprises:
- the binding module 103;
- a binding module manufacturer entity 140.

According to the disclosure, the binding module 103 is configured:
- to communicate with the profile management server 150, via an interface such as an ES8f interface, to obtain one or several profile packages, which are advantageously Protected Profile Packages PPP, and to report downloaded PPPs and associated EIDs and public keys (after the PPPs have been bound to these information as explained in what follows), once the PPPs have been downloaded in eUICCs, according to the disclosure, and as explained in what follows;
- to "bind" a given PPP with an eUICC 101 and to retrieve the public key and the EID associated with the eUICC 101.

Advantageously, the profile packages that are obtained by the binding module 103 from the profile management server 150 are not Bound Profile Packages, BPP, as defined in SGP.41, so as to avoid the drawbacks of the prior art that have been discussed above. Indeed, each BPP is defined for a given pair of public key and EID. Instead, the disclosure proposes that the binding module 103 is configured to obtain one or several protected profile packages that are not differentiated, so that they can be bound to any eUICC 101. Such undifferentiated protected profile packages can be Protected Profile Packages, PPP, as defined in the specifications SGP.41 and in the specifications SGP.21

As explained in what follows, to ensure that a given binding module 103 does not store more than a MAX_PPP at a given time, a security token can be initialized in the binding module 103 by the binding module manufacturer 140, the security token indicating MAX_PPP initially and being updated by the profile management server 150 at every package profile transaction (profile package ordering and profile package reporting, as described in what follows), MAX_PPP being an integer representing a maximum number of protected profile packages that can be stored by the binding module 103 at a given time.

The security token can be signed by the certification authority 130 before being initially stored in the binding module 103 by the binding module manufacturer 140. The security token, initially stored and signed by the CA 130, can be named funding token in what follows. The funding token indicates the number MAX_PPP that is attributed by the CA 130 which signs the funding token.

The security token can therefore be used by the binding module 103 to obtain protected profile packages from the profile management server 150, or from different profile management servers 150, as explained in what follows.

The arrow between the binding module manufacturer 140 and the binding module 103 does not refer to an interface, but indicates that the binding module manufacturer 140 produces the binding module 103 before it is implemented in the factory 110 by the device manufacturer 111.

The following interfaces can be supported by a communications network such as an IP network:
- the interface between the device manufacturer 111 and the profile management server 150, or between the binding module 103 and the profile management server 150;
- the interface between the profile management server 150 and the operator 160;
- the interfaces between the certification authority 130 and the EUM 120, and between the certification authority 130 and the profile management server 150; and
- the interface between the profile management server 150 and a monitoring module 170.

The system 10 may further comprise the monitoring module 170 that is interfaced with the profile management server 150, and preferably with several other profile management servers that are part of the system 10 (although not represented on figure 1) and that are entitled to deliver protected profile packages by the certification authority 130. The other profile management servers can belong to the same operator 160 as the profile management server 150, or can belong to several different operators.

The monitoring module 170 may belong to the same authority as the certification authority 130.

As explained in what follows, the monitoring module 170 enables to prevent or detect frauds during use of security tokens by binding modules and profile management servers, and may also enable to simplify the structure of the security tokens by renewing them, as explained in what follows.

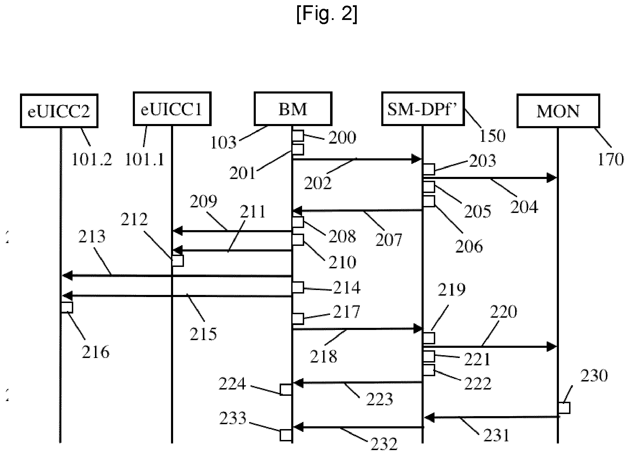

Figure 2 is a flowchart describing the steps of a method according to some embodiments of the disclosure.

The steps are carried out by the entities of the system 10 described when referring to figure 1.

At a step 200, the binding module 103 initially stores the funding token described above. Step 200 can therefore be carried out by the binding module manufacturer 140 during manufacturing of the binding module 103, before it is installed in the factory 110. As indicated above, the funding token is associated with a number PPP_MAX.

At a step 201, the binding module 103 prepares an order to retrieve X protected profile packages from a given mobile network operator, X being an integer equal to or greater than X, and being less than PPP_MAX, or to a variable REM indicating a number of remaining protected profile packages to be retrieved, described in what follows. The order prepared at step 201 comprises:
- the funding token, which is originally signed by the certification authority 130, and which indicates the number PPP_MAX, which can be further signed by the binding module 103, to obtain a signed security token, referred to a first signed security token in what follows. Also a variable REM described in what follows can be initialized to PPP_MAX;
- the number X of requested protected profile packages;
- optionally a type of eUICC, in which the profile package is to be installed.

No restriction is attached to a condition triggering the order to request X protected profile packages from a given operator, nor to the way of determining the number X of protected profile packages to be retrieved. For example, a command to order X protected profile packages can be receiving from an entity of the device manufacturer 111, and the device manufacturer 111 may request the binding module 103 to obtain X protected profile packages from a given mobile network operator.

At a step 202, the binding module 103 transmits the order to obtain X protected profile packages to the profile management server associated with the given mobile network operator, for example the profile management server 150 as shown on figure 2.

At a step 203, upon reception of the order at step 202, the profile management server 150 verifies the signature of the first signed security token, for example based on a public key of the binding module 103. In case of positive verification, the method can go on with steps 204 and 205.

According to some embodiments of the disclosure, the profile management server 150 transmits, at step 204, the first signed security token to the monitoring module 170, for verification. The monitoring module 170 may for example verify that the binding module 103 does not send the same first signed security token to two different profile management servers to request twice the same number of profile packages. If the monitoring module 170 detects a fraud, it may send an alert to the profile management server 150, which can therefore refuse to provide X protected profile packages to the binding module 103.

At a step 205, if the signature of the first signed token is positively verified by the profile management server 150, and optionally if no fraud is detected by the monitoring module 170, the profile management server 150 can prepare X protected profile packages corresponding to the type of eUICC indicated in the order. As indicated above, the protected profile packages are preferably PPPs, which can be installed on any eUICC of the type specified in the order. Each protected profile package can be associated with a unique package identifier.

At a step 206, the profile management server 150 generates another signed security token, named second signed security token, based on the first signed token, a current value of the variable REM, the variable REM indicating a number of remaining protected profile packages that the binding module 103 can order, and a signature of the profile management server 150. At step 206, REM is equal to PPP_MAX - X. It can be considered that the profile management server 150 updates the first signed security token, by adding the current value of the variable REM and the signature of the profile management server 150, to obtain the second signed security token.

According to some embodiments, each N^{th} signed token may encapsulate the (N-1)^{th} token, adds the current value of the variable REM, and a signature of the entity generating the N^{th} signature. This enables to track the different transaction operations that are performed by a binding module, based on a unique token, successively updated and/or signed after each transaction operation.

At a step 207, the profile management server 150 transmits the second signed security token to the binding module 103, and the X protected profile packages.

At a step 208, upon reception of the second signed security token and of the X protected profile packages, the binding module 103 may store the second signed security token in memory (as a current security token, replacing the previously stored first signed security token) and the X protected profile packages. Optionally, before storing the second signed security token, the binding module 103 may verify the signature of the second signed security token, for example based on a public key of the profile management server 150, to ensure that it originates from the profile management server 150.

In what follows, it is considered, for illustrative purposes only, that X is greater than, or equal to, 2. However, the binding module 103 can also order only one protected profile package (X=1) according to some embodiments.

The following steps 209 to 216 can be performed in an offline manner, and no restriction is attached to the time period between step 208 and step 209

At a step 209, the binding module 103 interrogates a first eUICC 101.1 embedded in a first device, during manufacturing of the first device, to obtain a first public key of the first eUICC 101.1 and a first EID of the first eUICC 101.1. This can be performed "on the fly", during the manufacturing of the first device.

At a step 210, the binding module 103 binds a first protected profile package, which is a first PPP associated with a first protected package identifier, among the X protected profile packages stored at step 208, with the first EID and first public key of the first eUICC 101.1, therefore converting the first PPP into a first BPP.

At a step 211, the binding module 103 delivers the first BPP to the first eUICC 101.1. In particular, the first BPP is transmitted to a first FPA associated with the first eUICC 101.1 so that the first FPA installs the first BPP on the first eUICC 101.1 at a step 212.

At a step 213, the binding module 103 interrogates a second eUICC 101.2 embedded in a second device, during manufacturing of the second device, to obtain a second public key of the second eUICC 101.2 and a second EID of the second eUICC 101.2.

At a step 214, the binding module 103 binds a second protected profile package, which is a second PPP associated with a second package identifier, among the X profile packages stored at step 208, and different from the first protected profile package, with the second EID and the second public key of the second eUICC 101.2, therefore converting the second PPP into a second BPP.

At a step 215, the binding module 103 delivers the second BPP to the second eUICC 101.2. In particular, the second BPP is transmitted to a second FPA associated with the second eUICC 101.2 so that the second FPA installs the second BPP on the second eUICC 101.2 at a step 216.

Steps 209 to 212 and 213 to 216, can be repeated for binding Y PPPs with corresponding eUICCs of device manufactured in the factory 110, Y being an integer equal to or greater than 2 in this example (but Y may be equal to 1 according to other examples), and Y being less than or equal to X. It is to be noted that several of the Y PPPs can also be bound to the same eUICCs according to some embodiments.

At a step 217, the binding module 103 prepares a report to indicate that Y protected profile packages have been installed and to request to update the current value of REM (so that it is augmented by Y, as explained in what follows).

The report comprises:
- the Y package identifiers of the Y profile packages that have been bound and installed in corresponding eUICCs;
- the second signed security token stored at step 208, indicating the current variable REM being equal to PPP_MAX -X, which can be signed by the binding module 103.

At a step 218, the binding module 103 transmits the report to the profile management server 150.

At a step 219, the profile management server 150 may verify the signature of the binding module 103 applied to the second signed security token received in the report. In case of negative verification, the profile management server 150 sends a refusal to the binding module 103. Else, in case of positive verification, the method goes to steps 220 and 221.

As explained above, according to some embodiments, the profile management server 150 may transmit the second signed security token to the monitoring module 170 for verification, at step 220. The monitoring module 170 may for example verify that the binding module 103 does not send the same second signed security token to two different profile management servers to report twice the downloading of the same Y bound profile packages. If the monitoring module 170 detects a fraud, it may send an alert to the profile management server 150, which can therefore refuse to update the second signed security token as explained in what follows.

At step 221, the profile management server 150 may verify that the reported Y bound profile packages identified by the Y package identifiers, correspond to protected profile packages that have been previously attributed and transmitted to the binding module 103 sending the report. If the profile management server 150 detects that at least one identified profile package has not been previously attributed by the profile management server 150 to the binding module 103, the profile management server 150 may send a refusal to the binding module.

Else, in case of positive verifications at steps 219, 221 and optionally in case of an absence of fraud detected by the monitoring module 170 after step 220, the profile management server 150 generates another signed security token, named third signed security token at step 222, based on the second signed security token, an updated current value of the variable REM, and a signature of the profile management server 150. The updated current value of REM is equal to PPP_MAX - X +Y. It can be considered that the profile management server 150 updates the second signed security token, by adding the current value of the variable REM and the signature of the profile management server 150, to obtain the third signed security token.

At a step 223, the profile management server 150 acknowledges the report received at step 218, by sending the third signed security token to the binding module 103.

At a step 224, the binding module 103 may store the third signed security token. Optionally, before storing the third signed security token, the binding module 103 may verify the signature of the third signed security token, for example based on a public key of the profile management server 150, to ensure that it originates from the profile management server 150.

The binding module 103 can therefore further use the third signed security token, in steps that are not described in what follows, to:
- request Z new protected profile packages, Z being less than REM=PPP_MAX - X +Y;
- report installation of Y2 protected profile packages (installed after being bound to obtain Y2 bound profile packages) that have been installed on eUICCs, among the X protected profile packages obtained at step 207. Indeed, in the case where Y is strictly less than X, then the binding module 103 still stores at least one PPP that has not been bound and installed after the reporting step 218.

According to some embodiments of the disclosure, the monitoring module 170 can renew a security token stored by a binding module, at a step 230. Indeed, as explained above, after each transaction operation (ordering or reporting for the binding module 103, and updating the current value REM after an order or a report for the profile management module 150), an N^{th} token is modified:
- by adding the signature of the binding module 103 before transmitting the N^{th} signed token in a report or order;
- into a (N+1)^{th} signed token when to update the current value REM by the profile management module 150, after a report or order.

Therefore, after several transaction operations, the N^{th} signed token can become long, so that it may be beneficial to renew it.

The monitoring module 170 may maintain the history of transaction operations involving a binding module 103, the history being updated after each step 204 and 220.

After a given amount of transaction operations, or based on another triggering event, the monitoring module 170 may generate a renewed token at step 230, the renewed token comprising:
- the maximum number PPP_MAX;
- the current value of the variable REM;
- the signature of the certification authority 130.

In the renewed token, all the signatures applied in the previous transaction operations, and all the previous values of the variable REM, are cancelled, so that the renewed token does not encapsulate the previous security tokens stored in the binding module 103.

After step 130, the monitoring module 170 transmits the renewed token to the profile management server 150 (for example in response to the reception of a signed token from the profile management server 150 at step 220 or 204). The profile management server 150 may then return the renewed signed security token to the binding module 130 at a step 232. Step 232 may therefore replace step 207 or 223 previously described.

At a step 233, the binding module 103 stores the renewed signed security token, for further use (for further orders and/or reports).

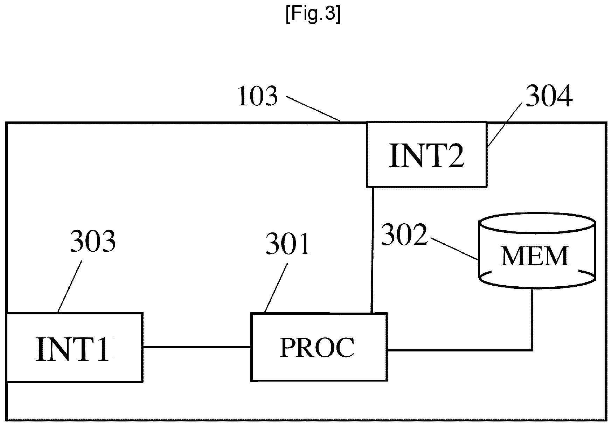

Figure 3 shows the structure of the binding module 103 according to some embodiments of the disclosure.

The binding module comprises a processor 301 and a memory 302.

The processor 301 may comprise one or multiple microprocessors, a Central Processing Unit (CPU), on a single Integrated Circuit (IC) or several IC chips.

No restriction is attached to the memory 302, which may be any non-transient, tangible form of memory. For example, it can comprise ROM, RAM, EEPROM and/or flash memory. The processor 301 may be programmable and may be configured to execute instructions that are stored in its internal memory or to execute instructions that are stored in the memory 302.

According to some embodiments, the binding module 103 may be, or may comprise, a Hardware Security Module, HSM.

The memory 302 can store instructions for implementing the steps 200, 201, 202, 208 to 211, 213 o 215, 217, 218 and 224 described above.

The binding module 103 further comprises a first interface 303 configured to communicate with the device manufacturer entity 111 or directly with the profile management server 150. As described above, the first interface 303 may be an ES8f' interface, which may be derived from the ES8f interface defined in the specifications SGP.22 and SGP.32.

The binding module 103 further comprises a second interface 304 configured communicate with FPAs 102 to install BPP on eUICCs of different devices 101 being manufactured in the factory 110. To this end, the second interface 304 may be an ESfac' interface which may be the ESipa or ES9 interface described in the specifications SGP.22 and SGP.32.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for installing a bound profile package on an embedded Universal Integrated Circuit Card (101), eUICC, during manufacturing of a device (100) embedding the eUICC, the method being carried out by a binding module (103) and comprising the following steps:
- ordering (202) at least one protected profile package from a profile management server;
- obtaining (209; 213) at least one identifier of the eUICC;
- binding (210; 214) at least one of the ordered at least one protected profile package with the identifier of the eUICC, to obtain a bound profile package;
- installing (211: 215) the obtained bound profile package on the eUICC.

2. The method according to claim 1, wherein the binding module (103) stores (200; 208; 224; 233) a security token comprising a current value of a variable representing a remaining number of protected profile packages that the binding module is authorized to obtain, and wherein the at least one protected profile package is obtained from the profile management server (150) by sending (202) an order to obtain X protected profile packages, the order comprising the security token, X being an integer equal to or greater than 1, and X being less than the current value.

3. The method according to claim 2 wherein the binding module (103) originally stores (200) a funding token signed by a certification authority (130), the funding token comprising a maximum value of protected profile packages that the binding module is authorized to obtain, wherein the current value is less than or equal to the maximum value, and wherein the security token is derived from the funding token or is the funding token.

4. The method according to claim 2 or 3, wherein, in response to the order to obtain X protected profile packages, the binding module (103) receives (207) X protected profile packages and an updated security token from the profile management server (150), the updated security token comprising an updated current value of the variable representing a remaining number of protected profile packages that the binding module is authorized to obtain, wherein the updated current value is equal to the current value decreased by X, and wherein the updated security token is stored as the security token in the binding module.

5. The method according to one of claims 2 to 4, further comprising, after installing Y bound profile packages on Y eUICC (101), Y being an integer equal to or greater than 1, the following steps:
- transmitting (218) a report indicating installation of the Y bound profile packages to the profile management server (150), the report further comprising the stored security token;
- receiving (223), from the profile management server, an acknowledgment of the report, the acknowledgment comprising an updated security token, the updated security token comprising an updated current value of the variable representing a remaining number of protected profile packages that the binding module is authorized to obtain, wherein the updated current value is equal to the current value augmented by Y, and wherein the updated security token is stored as the security token in the binding module.

6. The method according to claim 4 or 5, wherein the updated security token is signed by the profile management server (150).

7. The method according to one of claims 4 to 6, wherein the updated security token encapsulates the security token transmitted in the report or in the order.

8. The method according to one of claims 4 to 7, further comprising receiving (232) a renewed security token from the profile management server, wherein the renewed security token does not comprise the security token stored in the binding module (103), and comprises:
- the current value of the variable representing a remaining number of protected profile packages that the binding module is authorized to obtain;
- the maximum value of the variable representing a maximum number of protected profile packages that the binding module is authorized to obtain;
- a signature of the certification authority.

9. The method according to one of the preceding claims, wherein the binding module (103) obtains an identifier and a public key from the eUICC (101), and wherein the protected profile package is bound with the identifier and with the public key of the eUICC to obtain the bound profile package.

10. The method according to one of the preceding claims, wherein the ordered protected profile package is a Protected Profile Package defined in the specifications SGP.41 eSIM iFPP Architecture and Requirements, Draft 17, GSM Association, dated October 4, 2023.

11. A computer program comprising instructions arranged for implementing the method according to one of claims 1 to 10, when said instructions are executed by a processor (301).

12. A binding module (103) configured for installing a bound profile package on an embedded Universal Integrated Circuit Card, eUICC (101, during manufacturing of a device (110) embedding the eUICC, the binding module comprising a processor (301) configured for:
- ordering, via a first interface (303) of the binding module, at least one protected profile package from a profile management server;
- obtaining, via a second interface (304) of the binding module, at least one identifier of the eUICC;
- binding at least one of the ordered at least one protected profile package with the identifier of the eUICC, to obtain a bound profile package;
- installing, via the second interface, the obtained bound profile package on the eUICC.

13. The binding module according to claim 12, further comprising a memory (302) storing a security token comprising a current value of a variable representing a remaining number of protected profile packages that the binding module is authorized to obtain, and wherein the at least one protected profile package is obtained from the profile management server by sending an order to obtain X protected profile packages, the order comprising the security token, X being an integer equal to or greater than 1, and X being less than the current value

14. A system (10) comprising a binding module (101) according to claim 12 or 13, at least one device (110) comprising an embedded Universal Integrated Circuit Card, eUICC (101), and a profile management server (150).
